# EUROPEAN PATENT SPECIFICATION

(11) **EP 1 565 611 B1**
(45) Date of publication and mention of the grant of the patent: **02.01.2008**
(21) Application number: 03811749.5
(22) Date of filing: 04.11.2003
(51) Int. Cl.: D21C 5/02

(54) **METHOD OF REMOVING PRINTING INK FROM WASTE PAPER BY FLOTATION DEINKING**
VERFAHREN ZUR ENTFÄRBUNG VON ALTPAPIER DURCH FLOTATIONS-DEINKEN
PROCEDE D'ELIMINATION D'ENCRE D'IMPRESSION DE VIEUX PAPIERS PAR DESENCRAGE PAR FLOTTATION

(30) Priority: 25.11.2002 DE 10254862
(43) Date of publication of application: 24.08.2005
(73) Proprietor: Evonik Degussa GmbH, 40474 Düsseldorf (DE)
(72) Inventor: SÜSS, Hans, Ulrich, 63594 Hasselroth (DE); GRIMMER, Ralf, 63579 Freigericht (DE)
(86) International application number: PCT/EP2003/012281
(87) International publication number: WO 2004/048680

(56) References cited:
- EP-A- 0 737 774
- US-A- 4 865 690
- US-A- 4 959 123
- US-A- 5 225 046
- US-A- 5 227 019

## Description

The invention is directed towards a method of removing printing ink from waste paper by flotation deinking. The method comprises two flotation steps and is suitable especially for deinking waste paper which, in addition to conventionally printed paper, also contains paper printed with water-soluble inks, such as inkjet inks.

An important step in the recycling of waste paper is the removal of the printing inks as far as possible. In conventional flotation deinking, the fibres of the waste paper are made to swell by the use of alkali, as a result of which the printing ink can be separated off. Hydrophobic printing ink particles can be collected and floated from the suspension of fibres, fillers and printing inks by a fatty acid salt precipitated *in situ*. By means of this conventional method, which comprises breaking up the paper, sorting, flotation under alkaline conditions and, optionally, a secondary flotation operation, hydrophobic printing ink can in most cases be removed satisfactorily.

Water-soluble printing inks; on the other hand, such as flexographic printing inks and inkjet printing inks, which may also contain very small colouring pigments which have been rendered hydrophilic by sulfonation, cannot be separated off by conventional flotation deinking or cannot be separated off very satisfactorily. Office waste paper, which in itself is a high quality raw material, therefore becomes a problem material because it is too dark even for printing paper of the lowest brightness, newsprint. In addition, the dissolved printing inks contaminate the water circuit. Although it is possible to separate off such water-soluble inks and hydrophilic colouring pigments by washing the waste paper, the fillers are also removed at the same time, so that the yield of such a deinking process falls to values of about/below 70 %.

The currently known prior art for deinking is described in detail in the article "Zweistufige, alkalisch-saure Flotation zur Eliminierung schwerentfernbarer Druckfarben aus Altpapier" by H. U. Süss et al. in "Das Papier" 45, No. 3 (1991), pages 89 - 96. According to that article, waste paper printed with conventional intaglio printing and with aqueous inks can be deinked as follows: the waste paper is broken up in the presence of alkali, hydrogen peroxide and sodium silicate, the pulp is diluted and deflaked, the pulp is washed, followed by thickening and alkaline flotation and flocculation of the slurry formed in the washing step. The process as a whole is technically very complex and results in a poor yield.

According to the above-mentioned document, waste paper of which at least some is printed with flexographic printing inks can be deinked at least partly by a combination of conventional alkaline flotation with subsequent acid flotation in the presence of a quaternary ammonium salt having a hydrophobic side chain. In that process, the pulp from the alkaline flotation step is adjusted to pH 5 using sulfuric acid. The brightness (% ISO) obtainable by that method is still very low at about 54, so that the inclusion of a subsequent washing step is proposed. For the deinking of waste paper printed with offset inks and flexographic printing inks, H.U. Süss *et al.* (*loc. cit*.) proposed carrying out high-consistency thickening after the alkaline flotation, with acidification and flotation in the presence of a cationic surfactant not taking place until dilution to flotation consistency has been carried out again. Although that method yields good brightnesses, it is technically very complex. In addition, the yield is low on account of the dissolution of the filler chalk during the acidification.

For the secondary flotation of waste paper that has already been deinked in the conventional manner, the above-mentioned document proposes maintaining the pH value in the acid range by the continuous addition of an acid: Using aluminium sulfate as the acid, the pH value should be maintained in the range of from 6.5 to 6.8.

The article "Papierrecycling: Flotation von Füllstoffen und Fasern" by H.U. Süss et al. in "Wochenblatt für Papierfabrikation" 8 (1992), pages 303 to 307 also describes a two-step flotation - first under alkaline conditions and then under approximately neutral conditions for the removal of printing inks from waste paper. Sodium oleate is used as the collecting agent in the alkaline flotation step, with hexadecyltrimethylammonium chloride (HDTMA) being used in the neutral flotation step. There is no reference in that document as to how the pH value is to be adjusted in the virtually neutral flotation step.

Within the scope of considerations relating to the economy of flotation deinking under alkaline as well as under neutral conditions - see "Wochenblatt für Papierfabrikation", 123 (20), pages 916 - 919 (1995) - it has been found that fatty acids have a good collecting action in the alkaline flotation, while neutral surfactants, such as ethoxylated alcohols, are effective as foaming agents and lower the surface tension but do not generate any actual collector effect. Accordingly, neutral foaming agents are recommended only for use in secondary flotation.

The deinking methods according to US Patents 5,225,046 and 5,227,019 comprise five and six method steps, respectively, and accordingly are technically very complex. In the method according to US 5,225,046, a pulp is washed at a pH value of equal to/less than 7, in the presence of a surface-active deinking agent, the washed pulp is then bleached, and the bleached pulp is treated in a further washing or flotation operation at a pH value of equal to/less than 7 in the presence of an alcohol ethoxylate or propoxylate. In the method according to US 5,227,019, the pulp is washed after a first alkaline flotation step, then bleached with hydrogen peroxide under alkaline conditions and subsequently treated in one or more flotation steps at a pH value of equal to/less than 7 in the presence of an alcohol ethoxylate or propoxylate. In addition to the fact that the process is very complex from a technical point of view, the yield is drastically reduced owing to the necessarily prescribed washing step.

From EP 0 737 774 A1 it is known that aqueous waste products from deinking installations can be freed of inorganic particles and fibres contained therein by precipitating the mentioned solids particles together with calcium carbonate formed *in situ* from calcium hydroxide and introduced carbon dioxide. That method is, therefore, not a flotation method but a means of allowing the aqueous waste products to be returned to the deinking process again.

While carbon dioxide has not been used in the above-mentioned documents either as a flotation gas or as an agent for lowering the pH value, EP 0 927 789 A1 teaches that paper fibres can be separated by flotation from an aqueous suspension containing them, as is obtained in paper technology, for example flotation foams, by the use of carbon dioxide or a gas enriched with carbon dioxide. That flotation is not, however, so-called flotation deinking. In the article "Evaluation of carbon dioxide as a carriergas in flotation deinking" by Lorenzo Marchildon et al. in Tappi Journal, Vol. 76, No. 3, pages 155 - 159, it is stated that, in the case of acid flotation, beginning at a pH value of approximately 5, the optical properties when carbon dioxide is used as the flotation gas are better than those when air or nitrogen is used, but the mechanical properties are adversely affected. Although that disadvantage can be eliminated by a subsequent alkaline washing operation, the yield of deinked material is considerably reduced by such a process step. That document gives no indication as to how alkaline flotation is carried out first of all, immediately followed by flotation under neutral or weakly acid conditions.

As has been explained above, printing inks can be removed from waste paper in different ways, but those methods have deficiencies in one respect or another. Accordingly, the object of the present invention is directed towards the provision of an improved method of removing printing inks. By means of the method, which comprises an alkaline flotation step and a neutral to weakly acid flotation step, it is to be possible to obtain a deinked material with as high a brightness as possible in a satisfactory yield. According to a further object of the invention, it is to be possible to carry out the method in such a manner that no undesirable substances, such as sulfate, are introduced into the system and treatment of the waste water from the deinking process does not give rise to any new problems.

It has been found that, by using carbon dioxide immediately following a flotation step carried out under alkaline conditions, and by continuing the flotation under the pH conditions that become established in the weakly acid to neutral or weakly alkaline range, waste paper can be deinked to obtain high brightness in a good yield.

Accordingly, a method of removing printing inks has been found, which method comprises breaking up the waste paper in the presence of alkali to obtain a pulp, a first flotation step at a pH value in the range of from greater than 8 to 11 in the presence of sodium silicate and an anionic or non-ionic surfactant, and a second flotation step, wherein an acid is added to the pulp at the beginning of that step, characterised in that the pH value of the pulp from the first flotation step is lowered at the beginning of the second flotation step to a pH value in the range of from 5 to 7.5 using carbonic acid as the acid.

The further claims are directed towards preferred embodiments of the method according to the invention.

Accordingly, it has been found, surprisingly, that it is possible to combine the conventional alkaline flotation process and a weakly acid to neutral flotation directly, that is to say without the interposition of a washing step or a concentration step, if, during the conventional flotation, the pH vale is shifted to the approximately neutral or weakly acid range by means of carbonic acid. By the use of carbonic acid to lower the pH value to the approximately neutral or weakly acid range during the conventional flotation, a marked improvement in the removal of water-soluble inks, such as inkjet printing inks, is obtained.

By means of the method according to the invention it is possible to dispense not only with a washing step between the two flotation steps, which reduces the yield, but also with an additional thickening operation between an alkaline and an acid flotation step, as was considered to be necessary in the document mentioned at the beginning (Das Papier, 45/3 (1991), pages 89 - 96). By the use of carbon dioxide to lower the pH value instead of a strong acid, such as sulfuric acid, there is also no loss of chalk, which has recently become increasingly important as a filler in paper. In addition, concentration of salts in the circulating water does not occur, and no new problems arise during the water treatment when carbonic acid is used instead of a strong acid to lower the pH value. A further advantage of the method according to the invention is that the flotation foams from the alkaline flotation step and from the neutral to weakly acid flotation step can be collected and processed together.

It is a particular advantage of the method according to the invention that it can be carried out in existing flotation devices in the paper industry, that is to say in a flotation line comprising a plurality of flotation cells.
In order to carry out the method according to the invention it is simply necessary to provide in one or more of the rear cells a device for introducing carbon dioxide into the pulp or/and for enriching the flotation air with carbon dioxide. Because of the absence of foreign substances in the method according to the invention, it is preferred to combine the flotation foams of all the cells and feed them to a secondary flotation operation in a manner known *per se* for the purposes of separating off fibres.

The terms "first" and "second" flotation step are not to be understood as meaning that these two steps are strictly separate from one another, but rather that the flotation conditions relating to the pH value and/or the added flotation auxiliary substances, especially therefore the surfactants having flotation activity, have changed.

By the measure according to the invention, that is to say the lowering of the pH value during the flotation using carbon dioxide, the additional loss of fibres and fillers is at a low level. Under optimised conditions, the loss in the second flotation step can be reduced to values below 5 %. The fact that only a small amount of chalk goes into solution in the method according to the invention is also demonstrated by the small increase in the water hardness to values of about 4 to 5 mmol. Ca/l.

In order to carry out the method according to the invention, the waste paper is broken up in a known manner in the presence of alkali and sodium silicate and sorted. The subsequent alkaline flotation step is likewise carried out in a known manner, an anionic or non-ionic surfactant preferably being present as collecting agent. The surfactant, which may also be added during the breaking up of the waste paper, is used in an effective amount. Particular preference is given to anionic surfactants, such as especially alkali salts of fatty acids having more than 12 carbon atoms, especially from 16 to 20 carbon atoms. After the waste paper has been broken up, which takes place at a consistency in the range of about 15 % ± 5 %, the pulp is diluted in one or two steps to give a consistency capable of flotation - usually from 0.3 to 3 wt.%. The consistency for the flotation is preferably in the range of from 0.5 to 1.5 wt.%.

The alkalinity for the first flotation step results from the added sodium silicate and also from added alkali hydroxide solution, especially sodium hydroxide solution, and/or added alkali carbonate solution. The pH value during the first flotation step is preferably in the range of approximately from 8 to 10.5, especially from 8.5 to 10 and particularly preferably about 9 (9 ± 0.3). Air is usually used as the flotation gas; the amount of gas is governed by conditions relating to the apparatus and by the operating conditions, especially the effectiveness of the added collecting agent(s), and can be determined by simple optimisation.

In the second flotation step, which directly follows the first flotation step, the pH value is lowered at the beginning to a value in the range of from 5 to 7.5 using carbonic acid. According to a preferred embodiment, the pH value is lowered to from 5.5 to approximately 7. According to a preferred embodiment, the pH value is in the range of approximately from 8.5 to 10 during the first flotation step and in the range of from approximately 5.5 to approximately 7 at the beginning of the second flotation step.

The pH adjustment for the second flotation step can be achieved using carbon dioxide or air enriched with carbon dioxide, for example flue gas. After the pH value has been lowered in the second flotation step, the flotation can be carried out without further supply of further carbon dioxide, whereby the pH value slowly rises owing to the buffer action of the salts contained in the waste paper and the hardness of the water and may reach values of around or slightly above 8. Surprisingly, the decolouring action is substantially maintained in the second flotation step, even though the pH value may slowly migrate from the approximately neutral or weakly acid region to the weakly alkaline region.

According to an alternative embodiment, it is also possible for carbon dioxide or a gas enriched with carbon dioxide to be introduced continuously or periodically into the pulp to be floated throughout the duration of the second flotation step, in order to maintain the pH value below 8 and preferably in the range from 6.0 to approximately 7. In a flotation line comprising a plurality of flotation cells, carbon dioxide can be introduced into one or more of the last flotation cells to lower the pH. The amounts of carbon dioxide or of a gas enriched with carbon dioxide that are used are advantageously such that, although the desired pH regulation is possible, carbon dioxide substantially does not act as a flotation gas. It is desirable for safety-related considerations to limit the amount of carbon dioxide used in a deinking installation.

The second flotation step is advantageously carried out in the presence of an effective amount of a non-ionic and/or cationic surfactant. Particular preference is given to the use of a cationic surfactant, especially a quaternary ammonium salt or an ammonium salt of a tertiary amine. The flotation auxiliary substances to be used act as a foaming agent and/or a collecting agent. The effective amount of such flotation auxiliary substances that is used in the second flotation step is usually in the range of from 0.01 to 1.0 wt.%, based on the waste paper used in the pulp. The amount of the one or more flotation-active auxiliary substances that is used is preferably in the range of from 0.05 to 0.5. The person skilled in the art will determine the optimum amount of the mentioned auxiliary substance(s) by orientating experiments.

It has been found that, by optimising the choice of surfactant for the 2nd step, an amount in the range of only approximately from 0.02 to 0.1 wt.% is sufficient to achieve high activity, and a further increase in the amount used does not lead to a further increase in the brightness. A small amount is suitable especially in the case of a two-step secondary flotation, in order to increase the brightness of a moderately bright deinked material.

The flotation time of the two flotation steps can vary within wide limits, but preference is given to a total flotation time which can be implemented in existing flotation lines in practice. The total time for the two flotation steps is preferably in the range of from 4 to 20 minutes, especially from 4 to 10 minutes, the time for the second step being so chosen that an effective increase in the brightness can be obtained. The time for the second step is usually in the range of from 10 to 90 %, especially in the range from 20 to 50 %, of the flotation time for the two steps. According to a particularly preferred embodiment, the flotation time of each of the two steps is in the range of from 2 to 5 minutes.

Because the method according to the invention is suitable for separating from waste paper conventional, that is to say hydrophobic, printing inks as well as water-soluble printing inks and hydrophilic colouring pigments, the waste paper used in the method according to the invention preferably contains correspondingly printed papers.

The non-ionic surfactants used in the second flotation step are surface-active substances which have a hydrophobic grouping and a hydrophilic non-ionic grouping. Particular preference is given to alkoxylated alcohols and alkoxylated fatty amides, which can readily be prepared from the corresponding fatty alcohols or fatty amides by alkoxylation with ethylene oxide or propylene oxide.

The preferred cationic surfactants are quaternary ammonium salts which have at least one medium- to long-chained hydrocarbon radical (especially C₁₂-C₂₄). Of the quaternary ammonium salts having surfactant activity, which are frequently referred to as QUATS for short, the following classes of substances may be mentioned by way of example:
❖ Tri(C₁-C₃) alkyl-(C₁₂-C₁₈)alkylammonium salts, with hexadecyl-trimethylammonium salts, such as the chloride, being particularly preferred;
❖ Ester quats, which are to be understood as meaning, for example, reaction products of an alkanolamine with a medium- to long-chained fatty acid and subsequent quaternisation with an alkylating agent, such as dimethyl sulfate. There are suitable, for example, quaternisation products of reaction products of a natural fatty acid or a fatty acid mixture, such as tall oil fatty acid, with monoethanolamine, diethanolamine or triethanolamine;
❖ Fatty acylamidoamine ethoxylate QUATS: Such substances are obtainable, for example, by reaction of a fatty acid or a triglyceride with a polyvalent amine, such as dialkylenetriamine, with subsequent alkoxylation with, for example, ethylene oxide and subsequent alkylation with an alkylating agent, such as, for example, dimethyl sulfate. Particularly suitable substances from the last-mentioned class can be obtained, for example, by amidation of diethylenetriamine with oleic acid or tall oil fatty acid (molar ratio 1:2) with subsequent ethoxylation with ethylene oxide and quaternisation with dimethyl sulfate.
❖ Fatty acylamidoamine carboxylic acid salts, the above-mentioned reaction sequence taking place, instead of with alkylation, with salt formation with an acid, such as a lower carboxylic acid or hydroxycarboxylic acid, for example lactic acid.
❖ Also effective are quaternary ammonium salts, which are readily obtainable from a fatty amine by ethoxylation and subsequent quaternisation with an alkylating agent, such as dimethyl sulfate. For example, coconut fatty amine can first be ethoxylated and then converted into QUAT using dimethyl sulfate.
❖ A further class of effective cationic surfactants are fatty acylamidoalkylimidazolium salts, which are obtainable, for example, from reaction products of dialkylenetriamines with a fatty acid or a triglyceride, by imidazole ring formation.

The method according to the invention can be varied in many ways in respect of the individual features, but a particularly preferred method is characterised in that waste paper is broken up in the presence of sodium hydroxide, sodium silicate and hydrogen peroxide, the pulp is diluted to a consistency suitable for flotation, a first flotation step is carried out for from 2 to 10 minutes in the presence of from 0.3 to 1.5 wt.%, based on the waste paper used (absolutely dry), of an anionic surfactant, especially an alkali salt of a fatty acid having from 16 to 18 carbon atoms, at a pH value of approximately from 8.5 to 10.0, and the pH value of the pulp so contained is lowered to a value in the range of from 5.5 to 7.5, especially from 6 to 7, by introduction of a CO₂-rich gas, and the flotation is continued for a period of from 2 to 10 minutes in the presence of from 0.05 to 0.5 wt.%, based on the waste paper used (absolutely dry), of a cationic or non-ionic surfactant, especially a cationic surfactant, wherein the pH value of the pulp in the second step, which is initially lowered, may rise owing to the buffer action of the pulp and/or the hardness of the water used in the production of the pulp or is maintained in the range of from 6 to approximately 7 for an effective period by the periodic or continuous introduction of a CO₂-rich gas.

The method according to the invention is also suitable for improving the brightness of deinked material. The pulp fed to the two-step method is produced by suspending a deinked material.

The method according to the invention is illustrated further by means of the following Examples.

### Examples

### General procedure for pulp production and flotation:

Waste paper was broken up for 30 minutes in a Hobart kneader with 0.75 wt.% H₂O₂, 0.8 wt.% Na oleate, 2 wt.% sodium silicate and 0.8 wt.% NaOH at 40°C and a consistency of 15 %. Dilution to a consistency of 5 % was then carried out and, after a further 15 minutes' treatment, to the consistency of 1 % used for the flotation (percentages based in each case on the dry waste paper).

Unless indicated otherwise, flotation was carried out in a 10 1 flotation cell with 2 1 of air/minute at approximately 40°C for a total time of 10 minutes (standard). After the flotation, which was carried out in the presence of the indicated surfactants, thickening on a suction filter was carried out and the sheet was formed.

The brightness was determined in accordance with ISO2470. The yield was determined by the dry determination of acceptor and flotation foam. Where washing was carried out, this took place in a conventional washing cell using 2 1 of washing water per minute.

### Comparison Examples CE1 to CE5 and Example E1.

The results of a standard alkaline flotation (CE1 and CE3) and of the washing (CE2 and CE4) of office paper printed with inkjet inks (=OP) (CE1 and CE2) and of a 1:1 mixture of offset newspapers and inkjet-printed office paper (OP + NP) (CE2 and CE4) are shown in Table 1. This table also contains the results of a two-step flotation deinking wherein, in accordance with the prior art, intermediate thickening was carried out between the "alkaline" and the "neutral" flotation (CE5) and, according to Example E1 according to the invention, no intermediate thickening took place and, in addition, the total flotation time of 10 minutes was divided over the two steps equally. In the second flotation step of Example E1 and step (3) of Comparison Example CE5, hexadecyl-trimethylammonium chloride (= HDTMA) was used as the surfactant.

The tests show that it is possible, according to Example E1 of the invention, to carry out the acidification during the normal flotation time of 10 minutes and thereby remove the inkjet inks directly from the approximately neutralised pulp. The intermediate thickening between the alkaline and the neutral flotation according to CE5 accordingly proved to be unnecessary. Mixtures of paper can also be decoloured acceptably by means of washing (CE4), but the yield is very low.

**Table 1**

| No. | Waste paper | Measure | Surfactant (amount %) | Yield (%) | Brightness (% ISO) |
|---|---|---|---|---|---|
| CE1 | OP | Alkaline flotation (10 min) | Na oleate (0.8) | 91.5 | 51.1 |
| CE2 | OP | Washing | - | 69.8 | 63.0 |
| CE3 | NP + OP | Alkaline flotation (10 min) | Na oleate (0.8) | 86.2 | 53.4 |
| | (1:1) | | | | |
| CE4 | NP + OP | Washing | - | 68,6 | 58.3 |
| | (1:1) | | | | |
| CE5 | NP + OP | (1) Alkaline flotation; (pH 9.3; 10 min) | Na oleate (0.8) | 86.2 | 53.4 |
| | (1:1) | | | | |
| | | | | | |
| | | (2) Intermediate thickening | - | | |
| | | | | | |
| | | (3) Neutralisation to pH 6.8 with CO₂ and flotation (10 min) | HDTMA (0.3) | 78.8 | 57.8 |
| E1 | NP + OP | (1) Alkaline flotation (pH 9.7, 10 min) | Na oleate (0.8) | 85.9 | 53.4 |
| | (1:1) | | | | |
| | | | | | |
| | | (2) Neutralisation with CO₂ and 5 min flotation at pH 6.8 | HDTMA (0.3) | 79.2 | 58.8 |

### Examples 2 to 4

In Examples E2 to E4, the waste paper mixture (NP + BP (1:1)) was deinked in two steps at 40°C, wherein in the second step the pH value was lowered to < pH 7 using CO₂ (this takes place in a few seconds) and maintained substantially constant. The surfactant used was Na oleate (0.8 %) in the first step and HDTMA (0.3) in the second step. The flotation time was varied. CE6 shows washing again, it being clear that, despite higher losses in yield, no better brightness is obtained than in the two-step flotation according to the invention. Table 2 shows the parameters and results.

**Table 2:**

| No. | Measure | Flotation time (min) | pH value | | Loss in yield (%) (per step) | Brightness (% ISO) |
|---|---|---|---|---|---|---|
| | | | start | end | | |
| E2 | 1st flotation step | 5 | 10 | 9.8 | 13.4 | 57.0 |
| | | | | | | |
| | 2nd flotation step | 5 | 9.8 | 6.3 | 6.3 | 59.8 |
| E3 | 1st flotation step | 7 | 10 | 9.8 | 15.1 | 57.8 |
| | | | | | | |
| | 2nd flotation step | 7 | 9.8 | 6.2 | 6.7 | 60.9 |
| E4 | 1st flotation step | 5 | 8.6 | 8.4 | 18.8 | 57.5 |
| | | | | | | |
| | 2nd flotation step | 5 | 8.4 | 6.2 | 6.1 | 61.0 |
| CE6 | Washing at 20°C; consistency 2 %, 0.3 % Peratom dispersing agent | 10 | 8.3 | | 29.6 | 59.3 |

### Examples E5 and E6

Office paper printed with inkjet ink (OP) was deinked; according to the invention, the amount of the surfactant HDTMA used being varied. The first flotation step was carried out in the standard manner, i.e. 10 minutes at 40°C in the presence of 0.8 % Na oleate. The pH value was then lowered using CO₂ and flotation was then carried out without the supply of further CO₂, Although an increase in the amount of HDTMA used led to a further increase in the brightness, the yield was reduced at the same time.

**Table 3:**

| No. | Measure | Flotation time (min) | Surfactant (amount) | pH value | | Loss in yield (%) (per step) | Brightness (% ISO) |
|---|---|---|---|---|---|---|---|
| | | | | start | end | | |
| E5 | 1st flotation step | 10 | Na oleate (0.8) | ca. 9.9 | | 8.5 | 51.1 |
| | | | | | | | |
| | 2nd flotation step | 10 | HDTMA (0.3) | 6.6 | 8.2 | 15.6 | 57.3 |
| E6 | 1st flotation step | 10 | Na oleate (0.8) | ca. 9.9 | | 8.5 | 51.1 |
| | | | | | | | |
| | 2nd flotation step | 10 | HDTMA (0.5) | 7.0 | 8.2 | 30.2 | 61.0 |

### Examples E7 to E12 and CE7

A waste paper mixture of office paper and newsprint was decoloured. The two-step flotation was studied, the first step being carried out in the conventional manner at pH 9.6 in the presence of 0.8 % Na oleate as collecting agent. CE7 shows the result of the first step after 10 minutes' flotation. For Examples E7 to E12 the flotation of the first step was carried out under the same conditions for only 5 minutes. The second flotation step was carried out after lowering the pH value to approximately 6.4 using CO₂ and maintaining that pH value during a 5-minute flotation. Table 4 shows individual parameters and the results.

Using the indicated cationic surfactants, a brightness that was one to 2 points higher was obtained with the same total flotation time, although the yield was somewhat reduced.

### Notes to Table 4:

¹⁾ to ⁵⁾ are products of Degussa AG
¹⁾ is an ester quat based on quaternised ethoxylated tall amine
²⁾ and ⁴⁾ are imidazolinium salts
³⁾ is an ester quat based on an amidoamine of triethanolamine and a fatty acid
⁵⁾ Pseudo-QUAT = amidoamine ethoxylate salt

**Table 4: 1st flotation step alkaline (pH 9.6) (conventional conditions); 2nd flotation step with different cationic surfactants**

| No. | Cationic surfactant for 2nd flotation step | Amount of surfactant (%) | pH value | Flotation time (min) | Overall yield (%) | Brightness (% ISO) |
|---|---|---|---|---|---|---|
| CE7 | Alkaline flotation only | - | 9.6 | 10 | 84.6 | 57.0 |
| | 1st flotation step for E7 - E12 | - | 9.6 | 5 | n.d. | 556.3 |
| | | | | | | |
| | 2nd flotation step for E12 to E14 below | | | | | |
| E7 | HDTMA | 0.3 | 6.4 | 5 | 80.9 | 58.7 |
| E8.1 | Z-QUAT^{IM}TO10TH ¹⁾ | 0.3 | 6.4 | 5 | 82.7 | 57.1 |
| | | | | | | |
| E8.2 | Z-QUAT^{IM}TO10TH ¹⁾ | 0.5 | 6.4 | 5 | 82.4 | 57.8 |
| E9 | Rewoquat W 3690 PG ²⁾ | 0.5 | 6.4 | 5 | 78.1 | 59.1 |
| E10 | Rewoquat WE 38 DPG ³⁾ | 0.5 | 6.4 | 5 | 79.2 | 58.6 |
| E11 | Rewoquat W90 DPG ⁴⁾ | 0.5 | 6.4 | 5 | 77.5 | 59.0 |
| E12 | Rewosoft TE 192 ⁵⁾ | 0.5 | 6.4 | 5 | 79.4 | 59.0 |

### Examples E12 and E14 and CE8

A deinked material from an operating installation was subjected to secondary flotation in two steps in accordance with the invention.

The first flotation step was carried out after addition of 2 % sodium silicate and 0.8 % Na oleate to the pulp at a pH value of 9.2 and a consistency of 1 % at 40°C. In the second step, the pH was lowered to 6.8 using CO₂. Once that pH value had been reached, the CO₂ supply was discontinued and flotation was carried out with air. In Comparison Example CE8, alkaline flotation was carried out for 10 minutes, in Examples E13 and E14 flotation was carried out for 5 minutes in each step. The surfactant and the amount used were varied.

Table 5 shows the fundamental parameters and the results. Even a very small amount of a cationic surfactant produced a marked increase in the brightness.

**Table 5:**

| No. | Measure | Surfactant for 2nd step (amount %) | Flotation time (min) | Overall yield (%) | Brightness (% ISO) |
|---|---|---|---|---|---|
| CE8 | Alkaline flotation only | - | 10 | 90.9 | 67.4 |
| E13 | 1st step | - | 5 | n.d. | 68.1 |
| | | | | | |
| 13.1 | 2nd step | Rewoquat 3690 PG^{*)} | 5 | 88.0 | 70.8 |
| | | (0.05 %) | | | |
| 13.2 | 2nd step | (0.10 %) | 5 | 87.4 | 70.5 |
| | | | | | |
| 13.3 | 2nd step | (0.15 %) | 5 | 86.2 | 70.6 |
| E14 | 1st step | - | 5 | n.d. | 67.8 |
| | | | | | |
| 14.1 | 2nd step | Peratom ^{**)} | 5 | 89.4 | 68.9 |
| | | (0.05 %) | | | |
| 14.2 | 2nd step | (0.1 %) | 5 | 89.2 | 69.0 |

| | | | | | |
|---|---|---|---|---|---|
| *) imidazolium salt = cationic surfactant **) ethoxylated fatty alcohol = non-ionic surfactant | | | | | |

### Examples E15 and CE9: Secondary flotation of a deinked material of industrial origin

- CE9:: Alkaline flotation, 10 minutes at 40°C, at pH 9.2 in the presence of 0.3 % Na oleate and 2 % sodium silicate
Brightness 67.4 % (ISO)
Yield 90.9 %
- E15:: Two-step flotation, in each case 5 minutes/step; 40°C. Conditions in the first step as above, but flotation time only 5 minutes. In the second step, the pH was lowered to 6.8 using CO₂ and flotation was then carried out at that pH value in the presence of 0.05 % Rewoquat W3690 PG.
Brightness (after 1st step) 68.1
Brightness (after 2nd step) 70.8

## Claims

1. Method of removing printing ink from waste paper by flotation deinking, comprising breaking up the waste paper in the presence of alkali to obtain a pulp, a first flotation step at a pH value in the range of from greater than 8 to 11 in the presence of sodium silicate and an anionic or non-ionic surfactant, and a second flotation step, wherein an acid is added to the pulp at the beginning of that step,
**characterised in that**
the pH value of the pulp from the first flotation step is lowered at the beginning of the second flotation step to a pH value in the range of from 5 to 7.5 using carbonic acid as the acid.

2. Method according to claim 1,
**characterised in that**
the first flotation step is carried out in the presence of from 0.2 to 2 wt.%, based on the waste.paper used (absolutely dry), of an anionic surfactant at a pH value in the range of from greater than 8 to 10.5, especially from 8.5 to 10, and the pH value is lowered at the beginning of the second flotation step to a value in the range of from 5.5 to approximately 7.

3. Method according to claim 1 or 2,
**characterised in that**
the second flotation step is carried out in the presence of an amount in the range of from 0.01 to 1.0 wt.%, especially from 0.05 to 0.5, in each case based on the waste paper used (absolutely dry), of a non-ionic or cationic surfactant.

4. Method according to any one of claims 1 to 3,
**characterised in that**
the flotation is carried out at a consistency in the range of from 0.3 to 3 wt.%, especially from 0.5 to 1.5 wt.%.

5. Method according to any one of claims 1 to 4,
**characterised in that**
the pH value is lowered at the beginning of the second flotation step by the introduction of CO₂ or of air enriched with CO₂ and, if required, the pH value is maintained below 8, especially in the range of from 6.0 to 7.5, during the flotation by the continuous or periodic introduction of such a gas.

6. Method according to any one of claims 1 to 5,
**characterised in that**
the flotation of the two flotation steps is carried out for a total time of from 4 to 20 minutes, the second step accounting for from 10 to 90 %, especially from 20 to 50 %, of the total time.

7. Method according to any one of claims 1 to 6,
**characterised in that**
a waste paper mixture containing conventionally printed paper and paper printed with inkjet inks or/and other water-soluble inks is deinked.

8. Method according to claim 1,
**characterised in that**
waste paper is broken up in the presence of sodium hydroxide, sodium silicate and hydrogen peroxide, the pulp is diluted to a consistency suitable for flotation, the first flotation step is carried out for from 2 to 10 minutes in the presence of from 0.3 to 1.5 wt.%, based on the waste paper used (absolutely dry), of an anionic surfactant, especially an alkali salt of a fatty acid having from 16 to 18 carbon atoms, at a pH value of approximately from 8.5 to 10.0, the pH value of the pulp so contained is lowered to a value in the range of from 5.5 to 7.5, especially from 6 to 7, by introduction of a CO₂-rich gas, and the flotation is continued for a period of from 2 to 10 minutes in the presence of from 0.05 to 0.5 wt.%, based on the waste paper used (absolutely dry), of a cationic or non-ionic surfactant, especially a cationic surfactant, wherein the pH value of the pulp in the second step, which is initially lowered, may rise owing to the buffer action of the pulp and/or the hardness of the water used in the production of the pulp or is maintained at a value in the range of from 6 to 7 over an effective period by the periodic or continuous introduction of a CO₂-rich gas.

9. Method according to any one of claims 1 to 8,
**characterised in that**
there is used in the second flotation step a cationic surfactant from the group of the tri(C₁- to C₃-)alkyl-(C₁₂- to C₁₈-)alkylammonium salts, N-fatty acylamido-alkylimidazolinium salts, ester quats, quaternary fatty acylamidoamine ethoxylate quats and fatty acylamidoamine-carboxylic acid salts.

10. Method of increasing the brightness of a deinked material obtained by deinking, comprising the secondary flotation of a pulp produced from the deinked material,
**characterised in that**
immediately after an alkaline flotation step, the pH value is lowered to a pH value in the range of from 5 to 7.5, especially from 5.5 to 7, using carbonic acid, and flotation is continued for an effective period in the presence of a cationic or non-ionic surfactant.

## Patentansprüche

1. Verfahren zur Druckfarbenentfernung aus Altpapier durch Flotationsdeinking, umfassend Aufschlagen des Altpapiers in Gegenwart von Alkali unter Erhalt eines Pulps, eine erste Flotationsstufe bei einem pH-Wert im Bereich von grösser 8 bis 11 in Gegenwart von Wasserglas und eines anionischen oder nichtionischen Tensids und eine zweite Flotationsstufe, wobei zu Beginn dieser Stufe eine Säure zum Pulp gegeben wird, **dadurch gekennzeichnet, dass** man den pH-Wert des Pulps aus der ersten Flotationsstufe zu Beginn der zweiten Flotationsstufe unter Verwendung von Kohlensäure als Säure auf einen pH-Wert im Bereich von 5 bis 7,5 absenkt.

2. Verfahren nach Anspruch 1, **dadurch gekennzeichnet, dass** man die erste Flotationsstufe in Gegenwart von 0,2 bis 2 Gew.-%, bezogen auf das eingesetzte Altpapier (atro), eines anionischen Tensids bei einem pH-Wert im Bereich von grösser 8 bis 10,5, insbesondere 8,5 bis 10, durchführt und den pH-Wert zu Beginn der zweiten Flotationsstufe auf einen Wert im Bereich von 5,5 bis etwa 7 absenkt.

3. Verfahren nach Anspruch 1 oder 2, **dadurch gekennzeichnet, dass** man die zweite Flotationsstufe in Gegenwart einer Menge im Bereich von 0,01 bis 1,0 Gew.-%, insbesondere 0,05 bis 0,5, jeweils bezogen auf das eingesetzte Altpapier (atro), eines nichtionischen oder kationischen Tensids durchführt.

4. Verfahren nach einem der Ansprüche 1 bis 3, **dadurch gekennzeichnet, dass** man die Flotation bei einer Konsistenz (Stoffdichte) im Bereich von 0,3 bis 3 Gew.-%, insbesondere 0,5 bis 1,5 Gew.-% durchführt.

5. Verfahren nach einem der Ansprüche 1 bis 4, **dadurch gekennzeichnet, dass** man den pH-Wert zu Beginn der zweiten Flotationsstufe durch Einleiten von CO₂ oder von mit CO₂ angereicherter Luft absenkt und bei Bedarf während der Flotation durch kontinuierliches oder periodisches Einleiten eines solchen Gases den pH-Wert unter 8, insbesondere im Bereich von 6,0 bis 7,5, hält.

6. Verfahren nach einem der Ansprüche 1 bis 5, **dadurch gekennzeichnet, dass** man die Flotation der beiden Flotationsstufen während einer Gesamtdauer von 4 bis 20 Minuten, wobei die zweite Stufe 10 bis 90 %, insbesondere 20 bis 50 %, der Gesamtzeit beträgt, durchführt.

7. Verfahren nach einem der Ansprüche 1 bis 6, **dadurch gekennzeichnet, dass** man ein Altpapiergemisch, das konventionell und mit Inkjet-Farben oder/und anderen wasserlöslichen Farben bedruckte Papiere enthält, deinkt.

8. Verfahren nach Anspruch 1, **dadurch gekennzeichnet, dass** man Altpapier in Gegenwart von Natriumhydroxid, Wasserglas und Wasserstoffperoxid aufgeschlägt, den Pulp auf eine für eine Flotation geeignete Stoffdichte verdünnt, die erste Flotationsstufe in Gegenwart von 0,3 bis 1,5 Gew.-%, bezogen auf das eingesetzte Altpapier (atro), eines anionischen Tensids, insbesondere eines Alkalisalzes einer Fettsäure mit 16 bis 18 C-Atomen, bei einem pH-Wert von etwa 8,5 bis 10,0 2 bis 10 Minuten betreibt, den pH-Wert des so enthaltenen Pulps durch Einleiten eines CO₂-reichen Gases auf einen Wert im Bereich von 5,5 bis 7,5, insbesondere 6 bis 7, absenkt und die Flotation in Gegenwart von 0,05 bis 0,5 Gew.-%, bezogen auf das eingesetzte Altpapier (atro) eines kationischen oder nichtionischen Tensids, insbesondere eines kationischen Tensids, über einen Zeitraum von 2 bis 10 Minuten fortführt, wobei der zunächst abgesenkte pH-Wert des Pulps in der zweiten Stufe durch die Pufferwirkung des Pulps und/oder der Härte des bei der Pulpherstellung verwendeten Wassers ansteigen kann oder über eine wirksame Dauer durch periodisches oder kontinuierliches Einleiten eines CO₂-reichen Gases auf einen Wert im Bereich von 6 bis 7 gehalten wird.

9. Verfahren nach einem der Ansprüche 1 bis 8, **dadurch gekennzeichnet, dass** man in der zweiten Flotationsstufe ein kationisches Tensid aus der Reihe der Tri(C₁- bis C₃-)alkyl-(C₁₂- bis C₁₈-)alkylammoniumsalze, N-Fettacylamidoalkylimidazoliniumsalze, Esterquats, quaternäre Fettacylamidoamin-ethoxylatquats und Fettacylamidoamin-carbonsäuresalze verwendet.

10. Verfahren zur Erhöhung des Weissgrades eines durch Deinken gewonnenen Deinkingstoffes, umfassend eine Nachflotation eines aus dem Deinkingstoff erzeugten Pulps, **dadurch gekennzeichnet, dass** man unmittelbar nach einer alkalischen Flotationsstufe den pH-Wert unter Verwendung von Kohlensäure auf einen pH-Wert im Bereich von 5 bis 7,5, insbesondere 5,5 bis 7, absenkt und in Gegenwart eines kationischen oder nichtionischen Tensids eine wirksame Dauer weiter flotiert.

## Revendications

1. Procédé d'élimination des encres d'impression dans des vieux papiers par désencrage par flottation, lequel procédé comprend le morcellement des vieux papiers en présence d'alcali pour obtenir une pâte, une première étape de flottation à un pH dans le domaine allant de plus de 8 à 11, en présence de silicate de sodium et d'un tensioactif anionique ou non ionique, et une deuxième étape de flottation, procédé dans lequel un acide est ajouté à la pâte au début de cette étape,
**caractérisé en ce que**
le pH de la pâte provenant de la première étape de flottation est abaissé au début de la deuxième étape de flottation à un pH dans le domaine allant de 5 à 7,5 avec de l'acide carbonique comme acide.

2. Procédé selon la revendication 1, **caractérisé en ce que**
la première étape de flottation est réalisée en présence de 0,2 à 2% en poids, par rapport aux vieux papiers utilisés (absolument secs), d'un tensioactif anionique à un pH dans le domaine allant de plus de 8 à 10,5, en particulier de 8,5 à 10, et le pH est abaissé au début de la deuxième étape de flottation à une valeur dans le domaine allant de 5,5 à environ 7.

3. Procédé selon la revendication 1 ou 2, **caractérisé en ce que**
la deuxième étape de flottation est réalisée en présence d'une quantité dans une gamme allant de 0,01 à 1,0% en poids, en particulier de 0,05 à 0,5, dans chaque cas par rapport aux vieux papiers utilisés (absolument secs), d'un tensioactif non ionique ou cationique.

4. Procédé selon l'une quelconque des revendications 1 à 3, **caractérisé en ce que**
la flottation est réalisée à une consistance dans la gamme allant de 0,3 à 3% en poids, en particulier de 0,5 à 1,5% en poids.

5. Procédé selon l'une quelconque des revendications 1 à 4, **caractérisé en ce que**
le pH est abaissé au début de la deuxième étape de flottation par introduction de CO₂ ou d'air enrichi en CO₂ et, si nécessaire, le pH est maintenu au-dessous de 8, en particulier dans le domaine allant de 6,0 à 7,5, pendant la flottation, par introduction continue ou périodique de ce gaz.

6. Procédé selon l'une quelconque des revendications 1 à 5, **caractérisé en ce que**
la flottation des deux étapes de flottation est réalisée pendant une durée totale de 4 à 20 minutes, la deuxième étape représentant de 10 à 90%, en particulier de 20 à 50%, de la durée totale.

7. Procédé selon l'une quelconque des revendications 1 à 6, **caractérisé en ce que**
un mélange de vieux papiers contenant du papier imprimé de façon classique et du papier imprimé avec des encres pour jet d'encre ou/et d'autres encres solubles dans l'eau est désencré.

8. Procédé selon la revendication 1, **caractérisé en ce que**
les vieux papiers sont morcelés en présence d'hydroxyde de sodium, de silicate de sodium et de peroxyde d'hydrogène, la pâte est diluée à une consistance convenable pour la flottation, la première étape de flottation est réalisée pendant 2 à 10 minutes en présence de 0,3 à 1,5% en poids, par rapport aux vieux papiers utilisés (absolument secs), d'un tensioactif anionique, en particulier d'un sel alcalin d'un acide gras comportant de 16 à 18 atomes de carbone, à un pH allant d'environ 8,5 à 10,0, le pH de la pâte ainsi contenue est abaissé à une valeur dans le domaine allant de 5,5 à 7,5, en particulier de 6 à 7, par introduction d'un gaz riche en CO₂, et la flottation est poursuivie pendant une durée allant de 2 à 10 minutes en présence de 0,05 à 0,5% en poids, par rapport aux vieux papiers utilisés (absolument secs), d'un tensioactif cationique ou non ionique, en particulier d'un tensioactif cationique, procédé dans lequel le pH de la pâte, dans la deuxième étape, qui est initialement abaissé, peut s'élever du fait de l'action tampon de la pâte et/ou de la dureté de l'eau utilisée dans la production de la pâte, ou est maintenu à une valeur dans le domaine allant de 6 à 7 pendant une durée efficace par introduction périodique ou continue d'un gaz riche en CO₂.

9. Procédé selon l'une quelconque des revendications 1 à 8, **caractérisé en ce que**
on utilise, dans la deuxième étape de flottation, un tensioactif cationique du groupe constitué par les sels de tri(C₁ à C₃)alkyl-(C₁₂ à C₁₈)alkylammonium, les sels de N-acyl(gras)-amidoalkylimidazolinium, les esters quats, les quats quaternaire d'éthoxylates d'acyl(gras)amidoamine et les sels d'acyl(gras)amidoamine d'acides carboxyliques.

10. Procédé pour augmenter la blancheur d'un matériau désencré obtenu par désencrage, comprenant la flottation secondaire d'une pâte produite à partir du matériau désencré, **caractérisé en ce que**
juste après une étape de flottation alcaline, le pH est abaissé à un pH dans le domaine allant de 5 à 7,5, en particulier de 5,5 à 7, avec de l'acide carbonique, et la flottation est poursuivie pendant une durée efficace en présence d'un tensioactif cationique ou non ionique.
